# EUROPÄISCHE PATENTANMELDUNG

(11) **EP 2 671 759 A1**
(43) Veröffentlichungstag der Anmeldung: **11.12.2013**
(21) Anmeldenummer: 13151754.2
(22) Anmeldetag: 17.01.2013
(51) Int. Cl.: B60R 13/10

(54) **Halterung zur Aufnahme eines Schildes wie eines Kennzeichens für ein Kraftfahrzeug und Verfahren zu deren Herstellung**

(30) Priorität: 09.06.2012 DE 202012005563 U
(71) Anmelder: Schneider, Egon, 54294 Trier (DE)
(72) Erfinder: Schneider, Egon, 54294 Trier (DE)
(74) Vertreter: Kutsch, Bernd

(57) **Zusammenfassung**

Es wird Halterung (5) zur Aufnahme eines Schildes wie eines Kennzeichens für ein Kraftfahrzeug mit einem Aufnahmeteil (10) zur Aufnahme des Schildes und einem Abdeckteil (11) zur Fixierung des Schildes in dem Aufnahmteil (11) vorgeschlagen. Aufnahmeteil (10) und Abdeckteil (11) sind einstückig ausgebildet und das Aufnahmeteil (10) ist mit dem Abdeckteil (11) über ein Gelenk (12) verbunden. Die Halterung (5) weist weiter einen mit dem Aufnahmeteil (10) und dem Abdeckteil (11) gebildeten Verschluss (13) auf. Das Schild ist bei geöffnetem Verschluss (13) in das Aufnahmeteil (10) einlegbar und bei geschlossenem Verschluss (13) nicht aus der Halterung (5) entnehmbar. Daneben wird ein Verfahren zur Herstellung einer solchen Halterung (5) durch Spritzguss vorgeschlagen.

## Beschreibung

Die Erfindung betrifft eine Halterung zur Aufnahme eines Schildes wie eines Kennzeichens für ein Kraftfahrzeug mit einem Aufnahmeteil zur Aufnahme des Schildes und einem Abdeckteil zur Fixierung des Schildes in dem Aufnahmeteil.

Die Halterung eignet sich besonders für Wechselkennzeichen für Kraftfahrzeuge bzw. zur Aufnahme eines zweigeteilten Kraftfahrzeugkennzeichens. Sie kann jedoch auch für ein einteiliges Wechselkennzeichen oder für herkömmliche DIN-Kennzeichen oder sonstige Schilder benutzt werden.

### Hintergrund der Erfindung

In Deutschland werden am 01.07.2012 oder später Wechselkennzeichen für Kraftfahrzeuge eingeführt, wobei Wechselkennzeichen bedeutet, dass man zwei Fahrzeuge mit einem Paar zweiteiliger Kennzeichen führen kann. Bei der Zulassung von zwei damit auszustattenden Kraftfahrzeugen benötigt man beispielsweise in Deutschland zwei Hauptkennzeichen mit einer Größe entsprechend den bekannten DIN-Normen mit einem Siegel, sowie vier Zusatzkennzeichen mit beispielsweise 60 mm Länge und DIN-Höhe. Von diesen vier Zusatzkennzeichen werden zwei mit der Nummer 1 beschriftet und mit dem gültigen HU-Siegel von Fahrzeug 1 verklebt. Außerdem ist in kleiner Schrift das Kennzeichen darauf gedruckt. Das gleiche gilt auch für die anderen zwei Zusatzkennzeichen, welche mit der Nummer 2 für Fahrzeug 2 gekennzeichnet werden. Die Zusatzkennzeichen sind somit fester Bestandteil der Kennzeichenkombination. Nach der deutschen Fahrzeug-Zulassungsverordnung ist gemäß § 10 Abs. 5 ein festes Anbringung von Autokennzeichen vorgeschrieben.

### Stand der Technik

Kennzeichenhalterungen für Kraftfahrzeuge sind in vielfältiger Form bekannt. Diese sind zwar lösbar und sicher am Kraftfahrzeug angebracht, jedoch nicht für die Aufnahme zweigeteilter Wechselkennzeichen geeignet. Daneben ist deren Handhabung beim Wechseln des Kennzeichens relativ kompliziert.

In einer Recherche wurden folgende Dokumente aus dem Stand der Technik ermittelt: DE 10 2011 102 603 A1, DE 20 2011 002 022 U1, DE 10 2010 018 589 A1, DE 10 2008 002 659 B4, DE 10 2011 101 754 A1, DE 10 2010 011 257 A1, DE 10 2010 011 518 A1, DE 20 2010 011 209 U1, DE 20 2011 002 673 U1, CH 703 547 A1, AT 508 607 B1 und AT 11 964 U1.

Die Möglichkeit der Verwendung von Wechselkennzeichen stellt neue Anforderungen an solche Halterungen. So können beispielsweise das Kennzeichensiegel und das HU-Siegel nicht mehr an einem einzigen Kennzeichen der Kombination angebracht sein, da die Fälligkeit der HU bei den beiden Fahrzeugen 1 und 2 nicht gleich sein muss. Die Zusatzkennzeichen müssen daneben jeweils an dem zugelassenen Fahrzeug verbleiben, auch wenn dieses nicht aktiv am Straßenverkehr teilnimmt.

### Zusammenfassung und Vorteile der Erfindung

Die Erfindung betrifft eine Halterung gemäß Anspruch 1 und ein Verfahren gemäß Anspruch 14. Vorteilhafte Ausgestaltungen der Erfindung sind Gegenstand der abhängigen Ansprüche.

Die erfindungsgemäße Halterung zeichnet sich dadurch aus, dass sie kostengünstig über etablierte Spritzgussverfahren herstellbar ist, wobei beim Spritzgießen durch das spezielle Design der Halterung auf die Verwendung von Schiebeteilen verzichtet werden kann, was das Herstellungsverfahren weiter vereinfacht. Insbesondere kann auch der Schlüssel für den Verschluss zusammen mit der Herstellung der übrigen Halterung gleichfalls im Spritzgussverfahren in einem Arbeitsgang gemeinsam mit der Herstellung der übrigen Halterung hergestellt und danach erst von der Halterung gelöst werden. Dabei ist der Schlüssel vorzugsweise aus dem gleichen Material wie die übrige Halterung, d.h. beispielsweise aus Kunststoff oder vergleichsweise hartem Gummi. Daneben ist vorteilhaft, dass die Halterung zwar ohne Verwendung des Schlüssels verschließbar, aber nur mit Schlüssel zum Entnehmen des Schildes öffenbar ist. Dies verhindert Missbrauch mit dem Schild bzw. Diebstahl.

Neben dem Spritzgussverfahren eignen sich beispielsweise auch sogenannte Rapid-Prototyping-Verfahren zur Herstellung der Halterung, d. h. beispielsweise das schichtweise dreidimensionale Drucken der Halterung aus einem sich beim bzw. nach dem Drucken verfestigenden Kunststoff mit einem handelsüblichen Drucker. Dieses Verfahren ist zwar sehr flexibel, aber auch langsamer als Spritzguss.

Die erfindungsgemäße Halterung hat weiter den Vorteil, dass sich das Schild bequem und einfach einsetzen bzw. wechseln lässt. Insbesondere sind keine Fachkenntnisse oder weiteres oder gar spezielle Werkzeug außer dem Schlüssel erforderlich. Durch die einstückige Ausbildung gehen auch keine Teile verloren oder fallen herab.

Zum Fixieren des Schildes in der Halterung weist diese vorzugsweise Federelemente auf. Dies verhindert ein unerwünschtes Klappern des Schildes.

Der Verschluss kann in üblicherweise Weise als H-Verschluss mit Pins ausgebildet sind bzw. sich mit einem Tolls-Key öffnen lassen. Ein solcher Verschluss ist unkompliziert und preiswert herstellbar.

Durch die Ausnehmung in mindestens einem Seitenteil der Halterung wird das Entfernen des Schildes aus der geöffnete Halterung vereinfacht, da sich dadurch ein seitlicher Eingriff ergibt, der als Entnahmehilfe wirkt.

Bei der erfindungsgemäßen Halterung ist schließlich weiter vorteilhaft, dass das Schild ohne weitere Justage beim Einsetzen sicher und zuverlässig darin gehalten ist.

Die erfindungsgemäße Halterung ist im Übrigen je nach landesüblicher Spezifikation zur Verwendung als Kennzeichenhalterung flexibel in ihrem Design abänderbar bzw. in einfacher Weise an geänderte gesetzliche Vorgaben anpassbar.

### Zeichnungen

Die Erfindung wird anhand der Zeichnungen und der nachfolgenden Beschreibung näher erläutert.

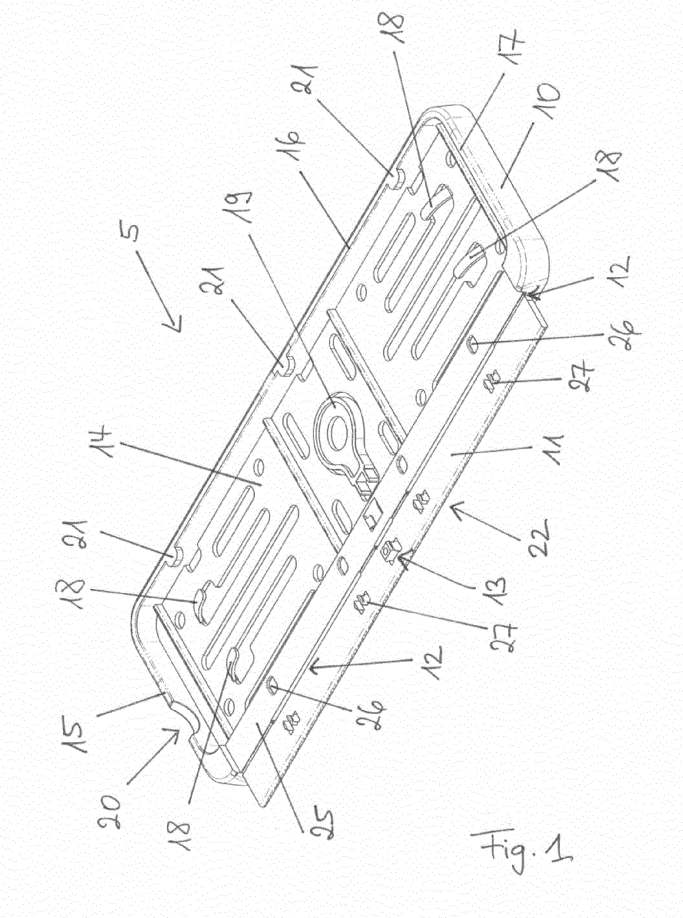

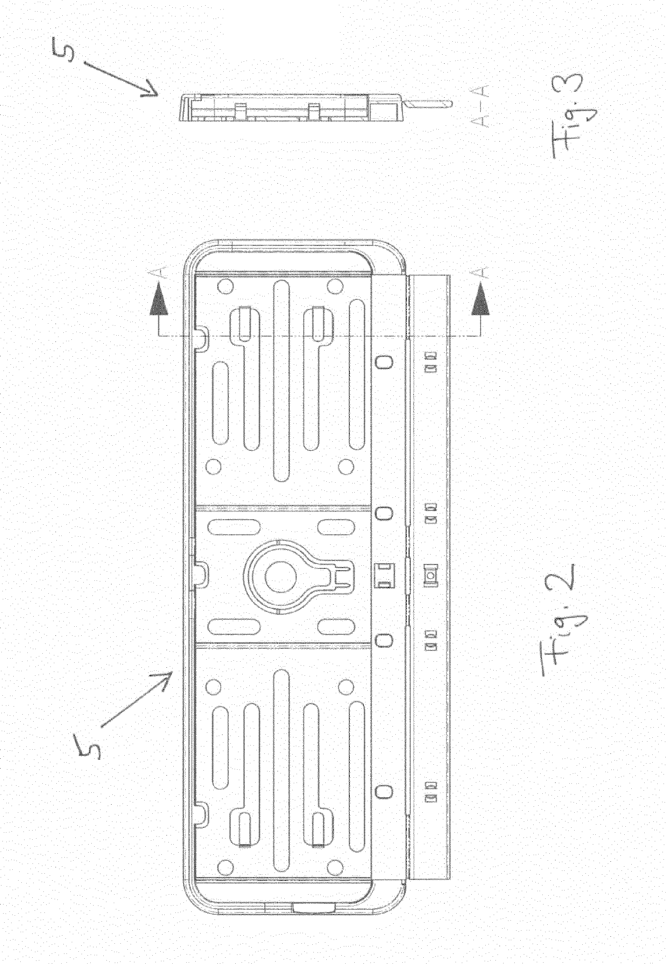

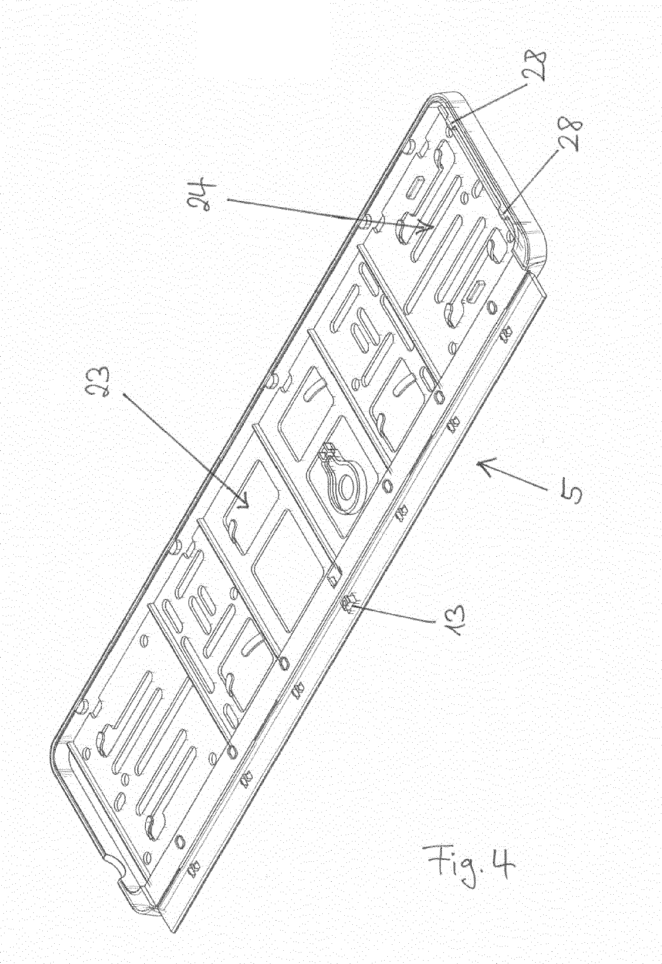

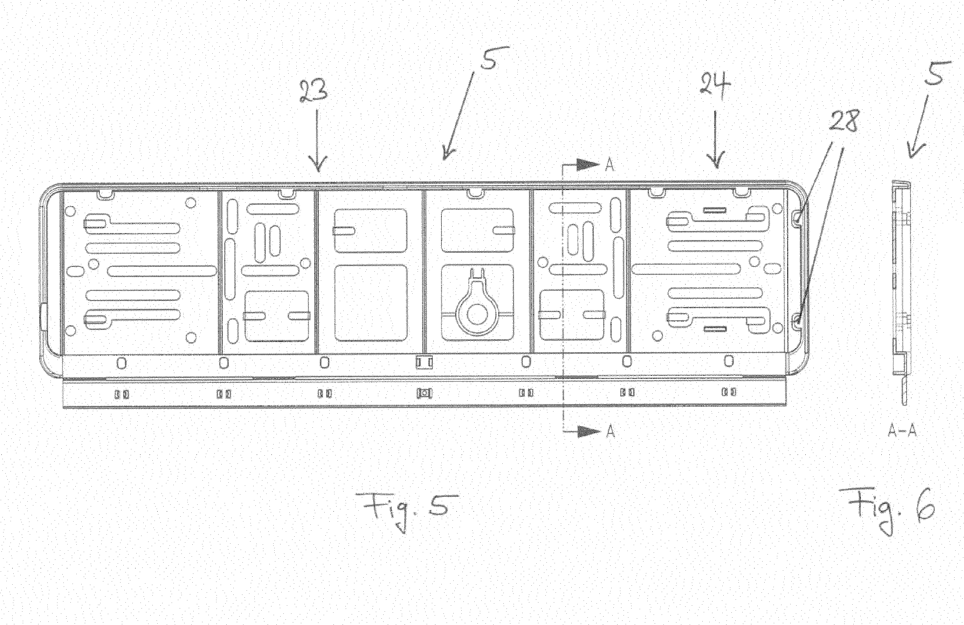

Es zeigt Fig. 1 eine perspektivische Ansicht eines ersten Ausführungsbeispiels der Erfindung in Form einer Halterung für ein schweizerisches Kraftfahrzeugkennzeichen, Fig. 2 eine Draufsicht auf Fig. 1, Fig. 3 einen Schnitt durch Fig. 2 entlang der eingezeichneten Schnittlinie, Fig. 4 eine perspektivische Ansicht eines zweiten Ausführungsbeispiels der Erfindung in Form einer Halterung für ein deutsches zweiteiliges Wechselkennzeichen, Fig. 5 ein Draufsicht auf Fig. 4 und Fig. 6 einen Schnitt durch Fig. 5 entlang der eingezeichneten Schnittlinie.

### Detaillierte Beschreibung der Erfindung

Die Figur 1 zeigt eine Halterung 5 für ein schweizerisches Kraftfahrzeugkennzeichen als erstes Ausführungsbeispiel der Erfindung. Die Halterung 5 weist dabei ein Aufnahmeteil 10 und ein Abdeckteil 11 auf, das mit dem Aufnahmeteil 10 über ein Gelenk 12 bereichsweise entlang einer Längsseite 22 der Halterung 5 verbunden ist. Daneben weist die Halterung 5 einen Verschluss 13 auf.

Das Aufnahmeteil 10 ist aus einer Rückplatte 14 ausgebildet und weist bereichsweise Federelemente 18 auf, die in Richtung auf das in die Halterung 5 einzulegende Schild gebogen sind, um auf das eingelegte Schild bei geschlossener Halterung 5 eine Federkraft auszuüben.

Das Aufnahmeteil 10 weist weiter vier Seitenteile 16, 17, 18, 25 auf, die sich vorzugsweise senkrecht zu der Ebene der Rückplatte 14 erstrecken und dazu ausgebildet sind, das in die Halterung eingelegte Kennzeichen seitlich zu umgeben, so dass es bei geschlossenem Verschluss nicht aus der Halterung entnehmbar bzw. auch nicht seitlich herausschiebbar ist. Eines der längsseitigen Seitenteile 16, 25 kann dabei durch das Abdeckteil 11 ersetzt sein bzw. mit dem Abdeckteil 11 zusammenwirken.

Die Fig. 1 zeigt weiter, dass nach Herstellung der Halterung 5 die Halterung 5 optional mit einem gleichzeitig hergestellten, mit der Halterung 5 lösbar verbundenen Schlüssel 19 verbunden ist, der vorzugsweise aus dem gleichen Material wie die Halterung 5 besteht. Weiter zeigt Fig. 1, dass eines der Seitenteile 15 eine Ausnehmung 20 aufweist, um einen seitlichen Eingriff in die Halterung 5 zum erleichterten Herausnehmen eines Schildes zu ermöglichen.

Das dem Abdeckteil 11 gegenüberliegende Seitenteil 16 weist vorzugsweise eine Mehrzahl von Vorsprüngen oder Nuten 21 auf, unter die das Schild eingeschoben werden kann, so dass es zwischen Rückplatte 14 und den Vorsprüngen 21 gehalten, von den Federelementen 18 gestützt, von den Seitenteilen 15, 16, 17, 25 seitlich umgeben und bei verschlossenem Verschluss 13 vorzugsweise von dem Abdeckteil 11 bereichsweise überdeckt wird.

Bei geschlossenem Verschluss 13, d. h. zugeklapptem Abdeckteil 11, wirkt das Abdeckteil 11 somit in einer Ausführungsform ähnlich wie die Vorsprünge 21, in dem es das Schild zwischen Rückplatte 14 und Abdeckteil 11 hält. Je nach Ausgestaltung bzw. Dimensionierung des Abdeckteils 11 und des Seitenteils 25 kann das Schild aber auch zwischen dem Seitenteil 25 und Abdeckteil 11 geklemmt sein.

In Fig. 1 ist schließlich gezeigt, dass das Seitenteil 25 mehrere Löcher 26, vorzugsweise Langlöcher, aufweist, in die Pins 27 eingreifen, wenn der Verschluss 13 geschlossen ist, d.h. das Abdeckteil 11 zugeklappt ist. Das Schließen des Abdeckteils 11 kann dabei durch eine oder mehrere, nicht dargestellte, mit Abdeckteil 11 und Aufnahmeteil 10 bzw. Seitenteil 25 verbundene Federn unterstützt werden, die das Abdeckteil 11 in die geschlossene Position ziehen.

Der Verschluss 13 ist beispielsweise als H-Verschluss ausgebildet bzw. mit einem Toll-Key zu öffnen. Diese Verschlussvariante ist einfach herstellbar und mit dem Spritzgussverfahren bei der Herstellung kompatibel. Alternativ kann aber auch ein anderer Verschlusstyp verwendet werden.

Die Fig. 2 zeigt eine Draufsicht auf Fig. 1 und Fig. 3 einen Schnitt durch Fig. 2 zur weiteren Erläuterung, wobei hier der Übersichtlichkeit halber auf Bezugszeichen verzichtet wurde.

Die Halterung 5 ist insgesamt einstückig ausgebildet, d.h. sie besteht aus dem Aufnahmeteil 10 (mit oder ohne Schlüssel 19) und dem fest mit dem Aufnahmeteil über das Gelenk 12 verbundenen Abdeckteil 11.

Vorzugsweise ist die Halterung 5 aus einem üblichen Kunststoff bzw. aus Plastik ausgebildet. Dies macht die Halterung 5 sowohl hinsichtlich der Herstellung als auch insgesamt besonders kostengünstig, was für die avisierte Verwendung von großer Bedeutung ist. Als Material für die Halterung 5 eignet sich jedoch auch ein vorzugsweise harter Gummi sowie grundsätzlich auch ein Metall.

Die Fig. 4 zeigt als zweites Ausführungsbeispiel eine Variante der Halterung gemäß Fig. 1, die auf die Erfordernisse bei der Verwendung deutscher Wechselkennzeichen angepasst wurde. Abgesehen von den nachfolgen erläuterten Abweichungen und anderen Dimensionen bzw. Proportionen unterscheiden sich Fig. 1 und Fig. 4 aber nicht, so dass in Fig. 4 weitgehend auf eine Wiederholung der Darstellung der bereits aus Fig. 1 bekannten Bezugszeichen verzichtet wurde.

Die Halterung 5 gemäß Fig. 4 weist, anders als im Fall von Fig. 1, einen ersten Aufnahmebereich 23 zur Aufnahme eines ersten Schildes und einen zweiten Aufnahmebereich 24 zur Aufnahme eine zweiten Schildes auf. In den ersten Aufnahmebereich 23 wird im Fall der Nutzung als Kennzeichenhalterung das Hauptkennzeichen und in den zweiten Aufnahmebereich das Zusatzkennzeichen eingelegt. Daneben sind in Fig. 4 analog zu den Vorsprüngen 21 auch ein oder mehrere seitliche Vorsprünge oder Nuten 28 vorgesehen, um das Halten des Schildes und insbesondere des relativ schmalen Zusatzkennzeichens zu verbessern.

Die Fig. 5 zeigt eine Draufsicht auf Fig. 4 und Fig. 6 einen Schnitt durch Fig. 5 zur weiteren Erläuterung, wobei hier der Übersichtlichkeit halber erneut auf Bezugszeichen verzichtet wurde.

Die Vorsprünge bzw. Nuten 21, 28 in den erläuterten Ausführungsbeispielen kann man wahlweise auch mit kleinen Haltehaken versehen, die das Schild aufnehmen können. Wie bereits erwähnt, kann das Abdeckteil 11 mit dem Aufnahmeteil 10 auch als Klemmschiene zusammenwirken. Als optional vorgesehen Federn zum Schließen des Abdeckteils eignen sich auch Federnuten. Die Anzahl solcher Federn richtet sich nach Länge der Halterung. Man kann aber auch Federklammern oder Schenkelfedern einsetzen. Der vorzugsweise verwendete Toll-Key-"Schlüssel" ist in Form und Gewicht so geschaffen, dass man ihn problemlos an einem Fahrzeugschlüssel anbringen kann. Es ist dann kein anderes Werkzeug für das Einsetzen des Kennzeichens bzw. Schildes notwendig.

Es ist offensichtlich, dass die erfindungsgemäße Halterung 5 nicht nur für zum Befestigen von Kennzeichen (seien sie einteilig, zweiteilig oder mehrteilig) an Kraftfahrzeugen geeignet ist, sondern auch als Kennzeichenhalterung für Fahrradständer, als Halterung für rote Dauerkennzeichen, für Oldtimerkennzeichen sowie auch für Warn- und Hinweistafeln wie sie beispielsweise an Gefahrguttransportern üblich sind. Weitere Anwendungen zum Halten von anderen Warnschildern oder Hinweistafeln oder als Multiadapter sind ebenfalls möglich.

## Patentansprüche

1. Halterung zur Aufnahme eines Schildes wie eines Kennzeichens für ein Kraftfahrzeug mit einem Aufnahmeteil (10) zur Aufnahme des Schildes und einem Abdeckteil (11) zur Fixierung des Schildes in dem Aufnahmteil (11), wobei Aufnahmeteil (10) und Abdeckteil (11) einstückig ausgebildet und das Aufnahmeteil (10) mit dem Abdeckteil (11) unlösbar über ein Gelenk (12) verbunden ist, und wobei die Halterung (5) einen mit dem Aufnahmeteil (10) und dem Abdeckteil (11) gebildeten, mit einem Schlüssel (19) öffenbaren Verschluss (13) aufweist, so dass das Schild bei geöffnetem Verschluss (13) in das Aufnahmeteil (10) einlegbar und bei geschlossenem Verschluss (13) nicht aus der Halterung (5) entnehmbar ist.

2. Halterung nach Anspruch 1, wobei die Halterung (5) insgesamt einstückig ausgebildet ist und/oder nur aus dem Aufnahmeteil (10), dem Abdeckteil (11) sowie optional einen mit dem Aufnahmeteil (10) lösbar verbundenen Schlüssel (19) besteht.

3. Halterung nach Anspruch 1 oder 2, wobei die Halterung (5) aus einem insbesondere spritzgegossenen Kunststoff oder aus Gummi besteht.

4. Halterung nach mindestens einem der vorangehenden Ansprüche, wobei das Aufnahmeteil eine Rückplatte (14) und Seitenteile (15, 16, 17), aufweist, wobei die Seitenteile (15, 16, 17) und die Rückplatte (14) dazu ausgebildet sind, das Schild rückseitig und seitlich dreiseitig oder vierseitig zu umgeben.

5. Halterung nach mindestens einem der vorangehenden Ansprüche, wobei das Aufnahmeteil (10) ein oder mehrere Federelemente (18) aufweist, die dazu ausgebildet sind, bei in die Halterung (5) eingelegtem Schild gegen das in die Halterung (5) eingelegte Schild zu pressen, um eine Bewegung des in der Halterung (5) eingelegten Schildes zu vermeiden oder zu reduzieren.

6. Halterung nach mindestens einem der vorangehenden Ansprüche, insbesondere nach Anspruch 2, wobei die Halterung (5) einen Schlüssel (19) aufweist, der nach Herstellung der Halterung (5) mit der Halterung lösbar verbunden ist.

7. Halterung nach Anspruch 4, wobei mindestens ein Seitenteil (17) mindestens eine Ausnehmung (20) aufweist, die derart ausgebildet ist, dass das Schild leichter aus der Halterung (5) entnehmbar ist.

8. Halterung nach Anspruch 4, wobei mindestens ein Seitenteil (16), insbesondere ein dem Abdeckteil (11) gegenüber liegendes Seitenteil (16), einen oder mehrere Vorsprünge oder Nuten (21) aufweist, die sich parallel zu einer Ebene der Rückplatte (14) erstrecken, und die derart ausgebildet sind, dass das Schild zwischen den oder die Vorsprünge (21) oder Nuten und die Rückplatte (14) einlegbar, insbesondere einschiebbar ist.

9. Halterung nach mindestens einem der vorangehenden Ansprüche, **dadurch gekennzeichnet, dass** die Halterung (5) derart ausgestaltet ist, dass sie im Spritzgussverfahren ohne Schiebeteile herstellbar ist.

10. Halterung nach mindestens einem der vorangehenden Ansprüche, **dadurch gekennzeichnet, dass** das Abdeckteil (11) in Form eine Leiste ausgebildet ist, die zumindest bereichsweise entlang einer Längsseite (22) der Halterung (5) über das Gelenk (12) mit dem Aufnahmeteil (10) verbunden ist.

11. Halterung nach mindestens einem der vorangehenden Ansprüche, **dadurch gekennzeichnet, dass** die Halterung (5) derart ausgebildet ist, dass sich das in die Halterung (5) eingelegte Schild bei geschlossenem Verschluss (13) bereichsweise zwischen dem Abdeckteil (11) und dem Aufnahmeteil (10) befindet, insbesondere zwischen Abdeckteil (11) und dem Aufnahmeteil (10) geklemmt ist, und/oder dass die Halterung (5) derart ausgebildet ist, dass das in die Halterung (5) eingelegte Schild bei geschlossenem Verschluss (13) bereichsweise von dem Abdeckteil (11) überdeckt ist.

12. Halterung nach mindestens einem der vorangehenden Ansprüche, **dadurch gekennzeichnet, dass** zumindest eine mit dem Abdeckteil (11) und dem Aufnahmeteil (10) verbundene Feder vorgesehen ist, so dass die Feder einem Öffnen des Abdeckteils (11) eine Kraft entgegensetzt.

13. Halterung nach mindestens einem der vorangehenden Ansprüche, **dadurch gekennzeichnet, dass** die Halterung (5) einen ersten Aufnahmebereich (23) und einen zweiten Aufnahmebereich (24) zur Aufnahme zweiteiliger Schilder oder Kennzeichen aufweist.

14. Verfahren zur Herstellung einer Halterung gemäß zumindest einem der vorstehenden Ansprüche, wobei die Halterung (5) im Spritzgussverfahren hergestellt wird.

15. Verfahren nach Anspruch 14, **dadurch gekennzeichnet dass** die Herstellung im Spritzgussverfahren ohne Verwendung von Schiebeteilen erfolgt.
